# EUROPÄISCHE PATENTANMELDUNG

(11) **EP 2 787 059 A1**
(43) Veröffentlichungstag der Anmeldung: **08.10.2014**
(21) Anmeldenummer: 13162338.1
(22) Anmeldetag: 04.04.2013
(51) Int. Cl.: C09K 21/02, A62C 99/00, A62D 1/00

(54) **Brandschutzformkörper**

(71) Anmelder: Sterrer, Petra, 4861 Schörfling (AT)
(72) Erfinder: Sterrer, Petra, 4861 Schörfling (AT)
(74) Vertreter: Sonn & Partner Patentanwälte

(57) **Zusammenfassung**

Die vorliegende Erfindung betrifft einen Brandschutzformkörper mit einer zumindest teilweisen äußeren Umhüllung aus einem thermoplastischen Material und einer Füllung, welche ein fließfähiges, anorganisches Granulat umfasst.

## Beschreibung

Die vorliegende Erfindung betrifft einen Brand- bzw. Feuerschutzformkörper, welcher bei Bedarf Löschmittel freisetzt.

Laut Wikipedia gehören zum Brandschutz alle Maßnahmen, die der Entstehung eines Brandes oder der Brandausbreitung durch Feuer oder Rauch vorbeugen, die Rettung von Menschen und Tieren oder wirksame Löscharbeiten bei einem Brand ermöglichen. Brandschutz und Feuerschutz sind Synonyme, wobei unter "Feuerschutz" auch der taktische Beschuss von gegnerischen Stellungen mit leichten Waffen verstanden wird. Im Folgenden wird daher für den erfindungsgemäßen Formkörper durchgehend der Begriff "Brandschutzformkörper" verwendet werden.

Löschmittel haben die Aufgabe, brennende Stoffe unter Berücksichtigung ihrer Brandklasse und vorherrschender Umfeldbedingungen (beispielsweise Personengefährdung oder Raumgröße) zu löschen. Sie werden zur Brandbekämpfung von den Feuerwehren oder in automatischen Feuerlöschanlagen eingesetzt oder stehen zur Selbsthilfe in tragbaren Feuerlöschern oder mobilen Feuerlöschgeräten zur Verfügung.

Jedes Löschmittel besitzt eine Hauptlöschwirkung und eventuelle Nebenlöschwirkungen. Die falsche Auswahl des Löschmittels kann fatale Folgen haben, so reagieren beispielsweise einige chemische Stoffe mit Wasser. Bei chemischen Löschmitteln werden bei hohen Temperaturen auch bisweilen Moleküle aufgebrochen und gehen neue Verbindungen ein. Mögliche Folgen davon sind Explosionsgefahr oder Säurebildung.

Als Stand der Technik trockener Löschmittel sind Löschpulver bekannt, welche schnell und effizient sind. Die Löschwirkung solcher Löschpulver wird durch den Stick- und Inhibitionseffekt erzielt, die Bildung von Sinterschichten auf dem Brandherd reduziert bzw. verhindert auch die Luftdiffusion zum Brandherd. Somit wird die Gefahr einer Brandausweitung bzw. eines Nachbrandes wirksam verhindert. Löschpulver bestehen zumeist aus anorganischen Salzen, die mit Funktionsadditiven versetzt sind, wodurch beispielsweise die Rieselfähigkeit und der Hydrophobierungseffekt eingestellt werden.

Üblichen Löschmittel weisen neben der inhärenten Problematik, dass es bereits zu einem Brand gekommen ist, im Wesentlichen zwei Hauptnachteile auf, nämlich eine fehlende Wiederverwendbarkeit einerseits und eine Gefährdung der Umwelt und/oder der Gesundheit von Personen anderseits, dazu kommt die Beschränkung der Anwendung der Löschmittel auf bestimmte Brandklassen.

So offenbaren die DE 197 25 761 A1, die DE 196 00 977 A1 und die DE 296 00 466 U1 die Verwendung von Hohlglaskugeln als wärme- und schallisolierende Zusätze in Brandschutzbeschichtungen und als Gerüststoffe zur Verbesserung der pastösen Eigenschaften von Schaummassen im vorbeugenden baulichen Brandschutz.

Die DE 43 16 189 A1 offenbart die Verwendung von Hohlglaskugeln als Verstärkungsmittel in thermoplastischen flammengeschützten Formmassen.

Die DE 102 39 631 A1 offenbart Isolierbauteile zur Wärme- und/oder Schallisolierung mit einer feuerhemmenden Beschichtung, die zur Reduzierung des Gewichts und Verbesserung der Isolierwirkung keramische Mikrohohlkugeln aufweisen.

Aus der DE 690 03 994 T2 ist ein pulverförmiges Löschmittel bekannt, das eine Mischung von 95 bis 70 Gew.-% eines Boroxidpulvers mit einem Partikeldurchmesser im Bereich von 5 bis 1000 µm und 5 bis 30 Gew.-% eines anorganischen Pulvers aus Partikeln mit einer im Wesentlichen sphärischen Partikelform enthält, die entweder als Glasperlen mit einem Partikeldurchmesser im Bereich von 5 bis 200 µm oder als hohle Mikrokugeln im Bereich von 50 bis 600 µm ausgebildet sind.

In der DE 38 30 122 A1 wird ein Brandbekämpfungsmaterial geoffenbart, das ganz oder hauptsächlich aus Glaspartikeln besteht, wobei die Glaspartikel Partikel aus zerkleinertem Glasmaterial sind, das einen hydrophoben Überzug trägt.

Aus der DE 43 43 196 A1 sind Hohlperlen aus Bohr enthaltenen Aluminiumphosphaten bekannt. Diese können als Verpackungsmaterial, zum Abdecken von Flüssigkeiten, als Zusatz zu Lacken, Beschichtungen, Mörteln, Beton und Gips, als Füllstoff für flüssige und feste Kunstharze, Elastomere und Kunststoffe, zur Herstellung von blättchenförmigen Pigmenten, als Elektroisoliermaterial, als Zusatz zu Spachtelmassen, keramischen Schlicken, Ziegelmasse, Estrichen, Kitten, Keramik, Glasmassen und metallischen und nichtmetallischen Sintermassen, als Ausgangsmaterialien zur Herstellung von Leicht-Formteilen und als Teil von Bau- und Konstruktionselementen mit isolierenden und schallabsorbierenden Eigenschaften, sowie gegebenenfalls auch als Isoliermaterial und für einen Brandschutz verwendet werden.

Aus der WO 2004/026788 A1 ist ein Isolierbauteil zur Wärme- und/oder Schallisolierung bekannt, welches Bauteil zumindest partiell mit einer feuerhemmenden Beschichtung versehen ist, wobei sich die Beschichtung mindestens aus 40 bis 90 Gew.-% eines keramischen Klebstoffes, 5 bis 50 Gew.-% keramischer Mikrohohlkugeln mit einer Korngröße im Bereich von 0,1 bis 3 mm sowie 0,1 bis 10 Gew.-% eines unter Wärmeeinwirkung expandierenden Treibmittels zusammensetzt.

Aus der WO 2007/125070 A2 ist ein Löschmittel enthaltend temperaturfestes, hohles Rundgranulat und ein System zum Löschen von Bränden im Gefahrenobjekt unter dessen Verwendung sowie ein Verfahren zum Löschen von Bränden bekannt, wobei ein entsprechendes Löschmittel auf den Brand aufgebracht wird.

Die Herstellung von Hohlglaskugeln ist bekannt und geht z. B. aus der DE 39 90 975 T1 und DE 689 26 048 T2 hervor, wobei dies im Wesentlichen durch Erhitzen von Vollglasteilchen erfolgt.

Vorbeugender Brandschutz ist der Überbegriff für alle Maßnahmen, die im Gegensatz zu Löschmitteln im Voraus die Entstehung, Ausbreitung und Auswirkung von Bränden verhindern, beziehungsweise stark einschränken. Brandschutz wird meist in Gebäuden betrieben, er beschränkt sich jedoch keinesfalls auf sie. Die baulichen Maßnahmen zum vorbeugenden Brandschutz beispielsweise in Gebäuden sind sehr vielfältig und erstrecken sich von den verwendeten Baustoffen und Bauteilen, geregelt in DIN 4102 und ENV 1992-1-2, über den baulichen Brandschutz in Industriebauten, geregelt in der DIN 18230, über die Fluchtwegplanung bis hin zu Löschanlagen in Gebäuden.

Die WO 2009/095421A1 betrifft ein Brandschutzmittel zum vorbeugenden Brandschutz durch dauerhaftes Aufbringen auf das Gefahrenobjekt und/oder dauerhaftes Verfüllen des Gefahrenobjekts bestehend aus einem bis wenigstens 1000 °C temperaturfesten hohlen Rundgranulats, und ein Verfahren zu dessen Einsatz.

Die vorliegende Erfindung hat die Aufgabe, einen vorbeugenden Brandschutz und gleichzeitig ein integriertes Löschmittel, beispielsweise in der Gefahrgut-Verpackung oder sonstigen Umhüllungen, sowie Einbauten von Gefahrgütern oder Bauteilen, wie z.B. Batterien, bereitzustellen.

Erfindungsgemäß wird diese Aufgabe dadurch gelöst, dass ein Brandschutzformkörper zumindest teilweise eine äußere Umhüllung aus einem thermoplastischen Material und eine Füllung aufweist, welche ein fließfähiges, anorganisches Granulat umfasst. Bei allfälliger Brandgefahr wird ein Gefahrgut von ein oder mehreren der erfindungsgemäßen Brandschutzformkörpern umhüllt, welche dadurch gleichzeitig eine isolierende und schützende Verpackung vorsehen. Im Brandfall schmilzt aufgrund der erhöhten Temperatur zumindest der vorzugsweise dem Gefahrgut zugewandte Teil der äußeren Umhüllung bestehend aus thermoplastischem Material und die fließfähige Füllung aus anorganischem Granulat ergießt sich über den Gegenstand. Weiterer Luftzutritt zum Brandherd wird dadurch zumindest stark behindert und ein bereits entstandener Brand so zuverlässig gelöscht. Die äußere Umhüllung kann dabei auf der dem Gefahrgut abgewandte Teil auch beispielsweise Karton oder einem anderen leicht bedruckbaren Träger umfassen und damit eine blisterartige Verpackung der fließfähige Füllung vorsehen, wichtig ist nur, dass der dem Gefahrgut zugewandte Teil zumindest bereichsweise schmelzen und die fließfähige Füllung freisetzen kann.

Das fließfähige, anorganische Granulat weist dabei vorzugsweise eine Dichte von 25 bis 400 kg/m³, noch bevorzugter 35 bis 80 kg/m³ und am meisten bevorzugt etwa 50 kg/m³ auf, sowie eine Erweichungs- bzw. Sintertemperatur von > 700 °C und einen Schmelzpunkt von > 1200 °C (welcher gegebenenfalls durch anorganische Zusätze auf einen höheren Wert bis > 3000 °C eingestellt werden kann, beispielsweise für den Schutz vor extrem heißen Bränden, wie Magnesiumbrände), während das thermoplastische Material, welches beispielsweise zumindest teilweise in Form einer Folie oder Platte vorliegen kann, eine weit geringere Schmelztemperatur aufweist, vorzugsweise im Bereich von ≤ 350 °C, noch bevorzugter ≤ 200 °C. Geeignete thermoplastische Materialien sind beispielsweise Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC) und Mischungen davon, bevorzugt sind PET, PE und Mischungen davon. Gemäß einer bevorzugten Ausführungsform der vorliegenden Erfindung umfasst das fließfähige, anorganische Granulat eine Struktur mit geschlossenen Zellen. Bevorzugt ist, dass das fließfähige, anorganische Granulat ausgewählt ist aus der Gruppe bestehend aus geblähtem Perlit, geblähtem Vermiculit, Natur- oder Hüttenbims, Blähton, Blähglas, Schaumschlacke, Steinwollegranulat oder Hüttenwolle sowie Kombinationen davon. Besonders bevorzugt ist, wenn für das fließfähige, anorganische Granulat als Rohstoff Natur-Mineral-Perlite mit SiO₂ 60-80%, CaO 0-2%, Al₂O₃ 7-18%, MgO 0-1,5%, TiO₂ 0-1%, Na₂O 0,6-10%, Fe₂O₃ 0-2,5% und K₂O 1-5,5% (alle Angaben in %-Masse) verwendet werden. Gemäß einer besonders bevorzugten Ausführungsform ist das fließfähige, anorganische Granulat in einer Folienverpackung vorgesehen, welche Verpackung nach Befüllen mit dem Granulat durch Absaugen der Luft evakuiert wurde und dadurch besonders formstabil ausgebildet ist. Vorzugsweise weist der erfindungsgemäße Brandschutzformkörper die äußere Umhüllung bestehend aus zwei zumindest bereichsweise miteinander verschweißten Folien auf, welche Folien auch unterschiedliche Stärke und Zusammensetzung aufweisen können, wobei die Füllung jeweils angrenzend an die verschweißten Bereiche vorgesehen ist. Dadurch kann der erfindungsgemäße Brandschutzformkörper sozusagen in Form von Laufmeterware vorgesehen werden, wobei die ein Granulat umschließenden Bereiche durch Schweißnähte abgegrenzt sind. Diese abgegrenzten Bereiche können auch evakuiert sein, wobei der erfindungsgemäße Brandschutzformkörper ein Höchstmaß an Flexibilität beibehält. Eine derartige Laufmeterware kann dann beispielsweise zur Verpackung beim Transport von großen und/oder runden Gefahrengütern vorgesehen werden.

Hinsichtlich des erfindungsgemäß verwendeten fließfähigen, anorganischen Granulats werden Perlite beispielsweise aus porigem und schmelzbaren Vulkangestein gewonnen. Beim raschen Erhitzen verdampft loses, durch Absorption gebundenes Wasser aus den Luftporen und der so geblähte Perlit nimmt ein bis zu 20-faches Volumen gegenüber dem Ausgangsmaterial an. Perlite sind von sich aus wasserabweisend, nicht brennbar und erfüllen die Brandschutzanforderungen A1.

Die Verwendung eines Granulats mit sehr geringen Schüttdichten ab 25 kg/m³ ist für das Transportwesen ein wichtiger Kostenfaktor. Ein wesentliches Merkmal ist dabei, dass das erfindungsgemäße Granulat nicht lose in die Verpackung eingeschüttet wird, sondern mittels einer Umhüllung bestehend zumindest teilweise aus Thermoplastmaterial zu einem Granulat-Polster verpackt ist und somit das Gefahrgut allseitig staubfrei umschließen kann. Bei Bedarf, im Falle eines Brandes, sind keine weiteren Zusatzbauteile wie z.B. Löscheinrichtungen notwendig, da das Granulat ohne weitere Zusatzhandhabungen freigesetzt und selbsttätig als Löschmittel aktiv wird. Ein weiterer Vorteil des erfindungsgemäßen Brandschutzformkörpers ist die hohe Flexibilität. Starre Isolierungen, wie beispielsweise Plattensysteme in Batteriekästen von Fahrzeugen, können durch Bewegungen, Schläge, Rütteln oder Vibrationen zerbrechen und erfüllen daher nicht mehr die geforderte Sicherheit. Bei Nichtgebrauch der Löschfunktion kann der erfindungsgemäße Brandschutzformkörper wieder verwendet werden, oder das Granulat wird ökologisch als Bauschutt entsorgt oder als Garten- und Bodenverbesserer verwendet. Die Herstellung des Granulats für den erfindungsgemäßen Brandschutzformkörper ist im Stand der Technik gut bekannt und durch Verwendung neuer Verfahren sehr wirtschaftlich und umweltfreundlich.

Der erfindungsgemäße Brandschutz vom Körper ist aufgrund seiner Eigenschaften für die Anwendung zur Vorbeugung der meisten Brandklassen geeignet. Polster befüllt mit dem fließfähigen, anorganischen Granulat können zur vorbeugenden Feuerschutz-Löschmittel-Kombination für den Transport gefährlicher Güter, wie beispielsweise Lithiumbatterien, als auch zum Einsatz in Batterieboxen von Flug- und Kraftfahrzeugen, Freizeit- oder Elektronikgeräten oder sonstigen Gerätschaften verwendet werden. Die erforderliche Sicherheit beim Transport ergibt sich aus der Verwendung stabiler Außenhüllen, wie z.B. Karton als Verpackungsmaterial, wahlweise mit oder ohne zusätzlicher feuerfester Innenbeschichtung, und den das Gefahrgut umhüllenden erfindungsgemäßen Brandschutzformkörpern, welche mit dem fließfähigen, anorganischen Granulat befüllt sind und das Gefahrgut allseitig umschließen. Im Falle beispielsweise eines Batteriebrandes kann sich kurzfristig eine hohe Wärmeenergie von z.B. 2000 °C entwickeln, wodurch die aus Thermoplastmaterial bestehende Umhüllung in diesem Einflussbereich sofort abschmilzt, das fließfähige anorganische Granulat kann nun das Gefahrgut kontaktieren und somit eine ideale Isolierschicht aufbauen. Bei Verwendung beispielsweise von Perlit für das erfindungsgemäße fließfähige anorganische Granulat erweicht dieses ab etwa 700 °C und sintert zu einer stabilen festen Form oder Teilform. Diese dichte Anbackung und der zusätzliche Sintereffekt fördern den Sauerstoffentzug am Brandherd, so dass für die Dauer des Batteriebrandes der Feuerschutz bzw. die Funktion der Feuerlöschung in Form des Granulats als mineralisches Löschmittel gegeben ist. Der Löscheffekt am Brandherd wird durch Ersticken erreicht, also durch Reduzierung des Luftvolumens in Folge von Fließen oder Rieseln des erfindungsgemäßen Granulats zu einer dichteren Granulatanbackung und/oder durch den Sinter- und Schmelzvorgang des (wasserfeien) Granulats.

Wenn im Zusammenhang mit der vorliegenden Erfindung von einem Granulat gesprochen wird, so wird damit Materie mit einem körnigen bis pulverförmigen, leicht schüttbaren Feststoff bezeichnet. Granulare Materie, auch ein granulares Medium oder Granulat genannt, besteht aus vielen kleinen, festen Partikeln wie Körnern oder Kugeln. Beispiele für diesen Zustand sind körnige Materialien wie Sand, pulverförmige Materialien wie Puder oder in großen Mengen auch loses Material wie beispielsweise Geröll. Man verwendet auch die Begriffe "Haufwerk" für mechanische und "Schüttgut" für logistische Aspekte. Wichtige Abgrenzungsmerkmale für Granulate sind, dass die Teilchen makroskopische Größe haben (diese werden materialkundlich "Korn" genannt), also weder durch Quanteneffekte noch durch thermische Bewegung gestört werden, und nur über Kontaktkräfte wechselwirken. Es handelt sich bei einem Granulat nicht um einen Aggregatzustand der Materie an sich, sondern um die kollektiven Eigenschaften einer Ansammlung von Festkörpern. Auffälligste Eigenschaft granularer Materie ist, dass sie sich manchmal wie ein Festkörper verhält, beispielsweise können Steine auf Sand liegen ohne einzusinken, und manchmal wie eine Flüssigkeit, so passt sich beispielsweise Sand der Form eines Gefäßes an und "fließt" bei Kippen aus ihm heraus.

Die Physik der granularen Materie beruht auf einfachen mechanischen und, bei genügend kleinen Partikeln, elektrostatischen Interaktionen. Durch die große Zahl der Reaktionspartner entsteht jedoch ein Vielkörperproblem mit hoher Komplexität, das zu vielfältigen Effekten führt. Ein Beispiel ist der Paranuss-Effekt, bei dem in einem Gemisch verschieden großer Partikel die größeren an die Oberfläche driften. Die Eigenschaften granularer Materie ändern sich stark, wenn ihr geringe Mengen an Flüssigkeit zugefügt werden, da diese die Reibung der Teilchen senken und durch Kohäsion zu gegenseitiger Anziehung führen kann. So erklärt sich etwa die Standfestigkeit von Sandburgen.

Auffälligste Eigenschaft granularer Materie ist, dass sie sich wie ein Festkörper verhält, wenn sie in Form gehalten wird, bei Auflösung der Form oder des Fließwiderstandes rieselt das Granulat fließfähig in eine andere sich gerade bietende Form. Das bedeutet, dass sich das erfindungsgemäße Granulat bei jeder Veränderung der ursprünglichen Aufbewahrungsform (Polster, Platte, Box etc.) oder der geometrischen Form der Verpackung der Umgebung anpasst und somit den Brandschutz und/oder die Löschwirkung optimiert, solange aufgrund übermäßiger Temperaturentwicklung keine Sinter- oder Schmelzphasen des erfindungsgemäßen Granulats eingetreten sind. Durch das optimierte dichte Abdecken durch das erfindungsgemäße Granulat oder in den Sinter- oder Schmelzphasen des Gefahrguts wird der Brandherd eingedämmt, wodurch ein Ausbreiten der Gefahr verhindert bzw. durch den zusätzlichen Sauerstoffentzug der Brandherd gelöscht wird.

Weiters ist das erfindungsgemäße Granulat bei geschlossener Zellen-Ausführung schwimmfähig, dies kann auch bei anderen Gefahrgütern hinsichtlich Löschwirkung von Vorteil sein.

Das erfindungsgemäße Granulat weist bei der geringen Schüttdichte eine hohe thermische Isolierfähigkeit auf, je nach mineralischer Analyse oder durch Additive kann der Erweichungs- bzw. der Schmelzpunkt des Granulats gesteuert werden. Das erfindungsgemäße Granulat hat eine gute Rieselfähigkeit und ist nicht gesundheits- und/oder umweltgefährdent.

Gemäß einer weiteren bevorzugten Ausführungsform wird die Reibungselektrizität des erfindungsgemäßen Granulats durch Vorsehen einer antistatisch ausgestatteten Umhüllung isoliert.

Enthält das Transport-Gefahrgut ein brandgefährdetes flüssiges Potential, so kann das erfindungsgemäße Granulat zusätzlich mit offenporigen und/oder saugfähigen Materialkomponenten, wie z.B. offenzelligem Perlit, vermischt werden, so dass bei Flüssigkeitsaustritt ein unkontrolliertes Wegfließen verhindert wird und die Brandschutz- und Löschwirkung aufrecht bleibt.

## Patentansprüche

1. Brandschutzformkörper mit einer zumindest teilweisen äußeren Umhüllung aus einem thermoplastischen Material und einer Füllung, welche ein fließfähiges, anorganisches Granulat umfasst.

2. Brandschutzformkörper nach Anspruch 1, **dadurch gekennzeichnet, dass** das fließfähige, anorganische Granulat eine Dichte von 25 bis 400 kg/m³, vorzugsweise 35 bis 80 kg/m³, noch bevorzugter etwa 50 kg/m³ aufweist sowie eine Erweichungs- bzw. Sintertemperatur von > 700 °C und einen Schmelzpunkt von > 1200 °C hat.

3. Brandschutzformkörper nach Anspruch 1 oder 2, **dadurch gekennzeichnet, dass** das thermoplastische Material der äußeren Umhüllung eine Schmelztemperatur im Bereich von ≤ 350 °C, vorzugsweise ≤ 200 °C, aufweist.

4. Brandschutzformkörper nach einem der Ansprüche 1 bis 3, **dadurch gekennzeichnet, dass** das thermoplastische Material der äußeren Umhüllung zumindest teilweise in Form einer Folie oder Platte vorliegt.

5. Brandschutzformkörper nach einem der Ansprüche 1 bis 4, **dadurch gekennzeichnet, dass** das fließfähige, anorganische Granulat eine Struktur mit geschlossenen Zellen umfaßt.

6. Brandschutzformkörper nach einem der Ansprüche 1 bis 5, **dadurch gekennzeichnet, dass** das fließfähige, anorganische Granulat ausgewählt ist aus der Gruppe bestehend aus geblähtem Perlit, geblähtem Vermiculit, Natur- oder Hüttenbims, Blähton, Blähglas, Schaumschlacke, Steinwollegranulat oder Hüttenwolle sowie Kombinationen davon.

7. Brandschutzformkörper nach Anspruch 6, **dadurch gekennzeichnet, dass** für das fließfähige, anorganische Granulat als Rohstoff Natur-Mineral-Perlite mit SiO₂ 60-80 %-Masse, CaO 0-2 %-Masse, Al₂O₃ 7-18 %-Masse, MgO 0-1,5 %-Masse, TiO₂ 0-1 %-Masse, Na₂O ,6-10 %-Masse, Fe₂O₃ 0-2,5 %-Masse und K₂O 1-5,5 %-Masse verwendet wird.

8. Brandschutzformkörper nach einem der Ansprüche 1 bis 7, **dadurch gekennzeichnet, dass** er evakuiert ist.

9. Brandschutzformkörper nach einem der Ansprüche 1 bis 8, **dadurch gekennzeichnet, dass** die äußere Umhüllung aus zwei zumindest bereichsweise miteinander verschweißten Folien besteht, welche Folien gegebenenfalls unterschiedliche Stärke und Zusammensetzung aufweisen, wobei die Füllung jeweils angrenzend an die verschweißten Bereiche vorgesehen ist.

10. Brandschutzformkörper nach einem der Ansprüche 1 bis 9, **dadurch gekennzeichnet, dass** die Umhüllung antistatisch ausgestattet ist.
